(19)

**Europäisches Patentamt**

**European Patent Office**

**Office européen des brevets**

(11) **EP 4 651 077 A1**

(12) **EUROPEAN PATENT APPLICATION**

(43) Date of publication:
**19.11.2025 Bulletin 2025/47**

(21) Application number: **25168556.6**

(22) Date of filing: **04.04.2025**

(51) International Patent Classification (IPC):
**G06T 7/11** (2017.01) **G06T 7/174** (2017.01)
**G06T 7/254** (2017.01)

(52) Cooperative Patent Classification (CPC):
**G06V 10/82; G06T 7/11; G06T 7/174; G06T 7/254;
G06V 10/764; G06V 10/776; G06V 20/49;**
G06T 2207/10016; G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.05.2024 US 202418663296**

(71) Applicant: **INTEL Corporation
Santa Clara, CA 95054 (US)**

(72) Inventors:
• **Nissenboim, Ido
9442112 Zichron Yaakov (IL)**
• **Levy, Noam
2172039 Karmiel (IL)**
• **Itskovich, Alexander
2720425 Kiryat Bialik (IL)**

(74) Representative: **Goddar, Heinz J.
Boehmert & Boehmert
Anwaltspartnerschaft mbB
Pettenkoferstrasse 22
80336 München (DE)**

(54) **TRAINING VIDEO SEGMENTATION MODELS USING TEMPORAL CONSISTENCY LOSS**

(57) Video segmentation predictions can be temporally unstable. Some techniques can be implemented to mitigate temporal instability, but the techniques can be computationally complex. Some techniques only account for changes in the output and do not account for changes in the input. To address some of these shortcomings, a lightweight technique can be implemented to compute a temporal consistency loss. The temporal consistency loss can be higher when a pixel-wise intensity change is small, and a pixel-wise prediction change is large. The temporal consistency loss can be lower otherwise. The temporal consistency loss can be used with one or more other losses as a part of a loss function for training a segmentation network to improve temporal stability in output segmentation maps.

**EP 4 651 077 A1**

**Description**

<u>Background</u>

Deep learning models (e.g., convolutional neural networks, transformer-based models, etc.) are used in a variety of artificial intelligence and machine learning applications such as computer vision, speech recognition, and natural language processing. Deep learning models may receive and process input such as images, videos, audio, speech, text, etc. Deep learning models can generate outputs, such as features and predictions, based on the input.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an exemplary system for training a segmentation network, according to some embodiments of the disclosure.
FIG. 2 illustrates a loss function calculator, according to some embodiments of the disclosure.
FIG. 3 illustrates characteristics of the pixel-wise penalty used in calculating the temporal consistency loss, according to some embodiments of the disclosure.
FIG. 4 illustrates characteristics of the pixel-wise penalty used in calculating the temporal consistency loss, according to some embodiments of the disclosure.
FIG. 5 illustrates characteristics of the pixel-wise penalty used in calculating the temporal consistency loss, according to some embodiments of the disclosure.
FIG. 6 illustrates segmentation maps produced by a first segmentation network trained with temporal consistency loss and a second segmentation network trained without temporal consistency loss, according to some embodiments of the disclosure.
FIG. 7 illustrates segmentation maps produced by a first segmentation network trained with temporal consistency loss and a second segmentation network trained without temporal consistency loss, according to some embodiments of the disclosure.
FIG. 8 depicts a flowchart illustrating a method for training a video segmentation model, according to some embodiments of the disclosure.
FIG. 9 is a block diagram of an exemplary computing device, according to some embodiments of the disclosure.

<u>Detailed Description</u>

*Overview*

Segmentation of objects and segmentation of foreground versus background for video are ubiquitous in many media products. For example, video conferencing products include segmentation of the foreground user versus the background, or segmentation of salient speakers. The segmentation results are used to blur or replace the background. The segmentation results can be used to frame the salient speaker. Segmentation may also be used in other applications such as video editing, perception and understanding in robotics and autonomous driving, industrial automation, video analysis, computer vision, etc.

Segmentation, as used herein, can include the process of classifying regions or pixels of video frames that are associated with different objects or different semantic meanings. Segmentation may include object segmentation of video frames, which can delineate boundaries of objects and distinguish the objects from the background or other objects. Segmentation may include semantic segmentation, which can assign a semantic label or class to each pixel in video frames. Segmentation may include instance segmentation, which can label pixels with their respective classes and distinguish individual instances of the same class. Segmentation, when applied to segmentation of video frames, is referred to as video segmentation herein. Segmentation can be implemented as a machine learning model, such as a neural network. The machine learning model may be referred to as a segmentation network herein.

One of the goals of video segmentation is accuracy. Accuracy may include correctly identifying boundaries of an object. Accuracy may include determining the correct label or class associated with a pixel. One exemplary accuracy metric may include intersection over union (IoU). The accuracy metric can measure the overlap between the predicted segmentation map and the ground truth map. IoU may be calculated as the ratio of the intersection area between the predicted and ground truth maps to the union area of the two maps. Higher IoU values can indicate better segmentation accuracy. Another exemplary accuracy metric may include mean IoU (MIoU). The accuracy metric may be calculated as

the average IoU across all classes or labels. Another exemplary accuracy metric may include pixel accuracy. The accuracy metric can calculate the percentage of pixels that are correctly classified by a segmentation network compared to the ground truth. Another exemplary metric may include boundary accuracy. The accuracy metric can evaluate the accuracy of the segmented boundaries or contours by measuring the distance between the predicted boundaries and the ground truth boundaries and considering factors such as boundary precision and recall. Segmentation models that include machine learning models can be trained to perform segmentation in a supervised manner. Accuracy of the segmentation model may be evaluated by comparing the predicted segmentation maps to the ground truth segmentation maps. The segmentation model may be trained to optimize the accuracy of the segmentation model.

Accuracy metrics mentioned above consider the accuracy in a single video frame, and whether pixels of the video frame are segmented correctly.

Besides accuracy, temporal stability of the segmentation masks may impact the visual quality or performance of video segmentation. Video segmentation predictions can be temporally unstable. For a video, which includes a temporal sequence of video frames, a small error may occur at a slightly different location between consecutive video frames, which can cause annoying artifacts of instability. In some cases, temporal stability may be more important than accuracy. A stable segmentation boundary around a static object can be more important than to precisely align the segmentation to the object boundaries. Accuracy metrics that only consider the accuracy in a single video frame would not penalize temporal instability properly and adequately.

Temporal stability can evaluate consistency and coherence of the segmentation maps across consecutive video frames in a video. A temporally stable segmentation should maintain consistent labeling and boundaries for objects or regions that are present over multiple video frames, avoiding abrupt changes or flickering artifacts. Temporal stability can consider temporal consistency and coherence of the segmentation across frames. Temporal stability metrics, such as average temporal IoU (TIoU), temporal consistency error (TCE), and average region tracking accuracy, can be used to evaluate the stability and coherence of the segmentation over time (or across video frames). Measuring temporal stability can include comparing the segmentation maps of consecutive video frames or a temporal window of video frames and quantifying the differences or variations in the segmented regions or objects. Average TIoU may consider the overlap between segmented regions or objects across consecutive frames. For each object instance or region, the TIoU may be calculated as the ratio of the intersection volume (overlap across frames) to the union volume of the segmented volumes in the current video frame and the previous video frame. The TIoUs for the different object instances or regions can be averaged across all object instances or regions to obtain an overall measure of temporal stability. TCE may quantify the inconsistencies in the segmentation maps between consecutive video frames. TCE may include calculating the number of pixels that change labels or classes between video frames, normalized by the total number of pixels. A lower TCE value can indicate higher temporal consistency and stability in the segmentation maps. Average region tracking consistency can include measuring the overlap or similarity between the segmented regions in the current video frame and the tracked or propagated regions from the previous video frame.

Training segmentation models using these temporal stability metrics can mitigate temporal instability, but computing some of these metrics can be computationally complex. For example, some of the metrics may include optical-flow calculations, which can be computationally expensive and not necessarily reliable. Since temporal stability is a second-order optimization (while the accuracy metrics mentioned above are first order optimizations), one or more temporal stability metrics may be used to complement and in addition to other accuracy metrics. It may be more desirable to have a lightweight implementation for calculating a temporal stability metric. Many of the temporal stability metrics only account for changes in the output (e.g., optimize to increase stability in the output only) and do not account for changes in the input (e.g., account for actual changes in the scene). Some approaches may augment the inference of the segmentation model to fix the stability of the output.

To address some of these shortcomings, a lightweight technique can be implemented to compute a temporal consistency loss. The temporal consistency loss can be higher when a pixel-wise intensity change is small, and a pixel-wise prediction change is large. The temporal consistency loss can be lower otherwise. Temporal consistency loss would consider both the output and the input to the segmentation network. Temporal consistency loss would not punish or penalize for changes in the label if the scene did change at the particular location. However, temporal consistency loss would punish or penalize for changes in the label if the scene did not change at the particular location. Temporal consistency loss can penalize for areas which remain the same as the previous video frame in the input and the output changed significantly relative to the previous video frame. The temporal consistency loss can be used with one or more other losses as a part of a loss function for training a segmentation network to improve temporal stability in output segmentation maps.

Including temporal consistency loss as described and illustrated herein can result in a fast and lightweight solution with low computational complexity. Temporal consistency loss can complement one or more other losses to offer a robust solution. An implementation having temporal consistency loss does not impact the inference of the segmentation network and can be used offline in the training process only. Using the temporal consistency loss as part of the loss function in training can optimize the segmentation network to produce a stable output, remaining stable as long as the input is stable and changing the output in areas of the input exhibiting a significant change relative to a previous video frame. Considering changes in the input in manners described and illustrated herein can yield significant technical benefits when optimizing for temporal stability in video segmentation.

*Training a segmentation network for temporal consistency using both the input and output of the segmentation network*

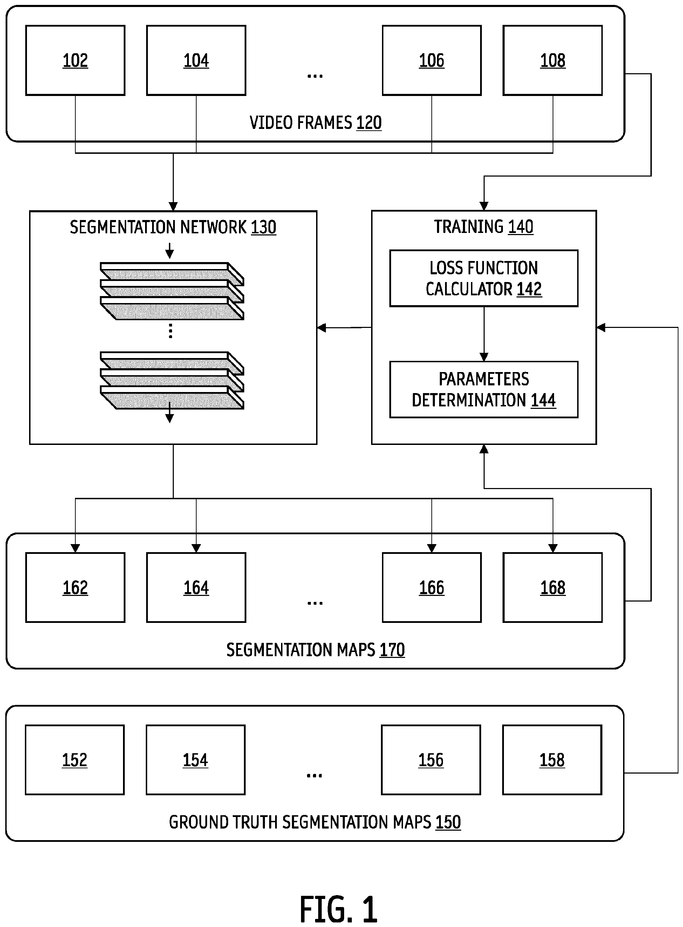

FIG. 1 illustrates an exemplary system for training segmentation network 130, according to some embodiments of the disclosure. Segmentation network 130 may receive video frames 120. Video frames 120 may include a temporal sequence of video frames, e.g., video frame 102, video frame 104, ... video frame 106, and video frame 108. A video frame may include an image having pixels. Segmentation network 130 may be trained by training 140 to perform video segmentation, and output segmentation predictions for the video frames 120, such as segmentation maps 170. Segmentation maps 170 may include a temporal sequence of segmentation maps, e.g., segmentation map 162 corresponding to video frame 102, segmentation map 164 corresponding to video frame 104, ... segmentation map 166 corresponding to video frame 106, and segmentation map 168 corresponding to video frame 108. A segmentation map may include a map having pixels where each pixel may include one or more associated labels/classes, and/or one or more probabilities that the pixel belongs to one or more classes/labels. In some cases, a segmentation map may have multiple channels, where each channel may correspond to a particular class or label.

Segmentation network 130 may include a machine learning model, such as deep learning model or a deep neural network. Segmentation network 130 may include a plurality of layers. One exemplary implementation of segmentation network 130 can include a three-dimensional convolutional neural network (3D CNN). A 3D CNN as part of segmentation network 130 may include layers for performing specific operations on video frames 120. Video frames 120 may form a spatiotemporal volume, where the third dimension represents the temporal aspect of video frames 120. Segmentation network 130 may include one or more input layers, which can receive video frames 120 or the spatiotemporal volume. An input layer may perform one or more functions such as formatting, pre-processing, augmentation, conversion of color spaces, batching, etc. Segmentation network 130 may include one or more 3D convolutional layers. A 3D convolutional layer may apply 3D filters or kernels to the input to extract spatiotemporal features. The 3D convolutional layer can convolve the input with learnable weights of the filters or kernels (the weights are an example of parameters of segmentation network 130) across all three dimensions (e.g., height, width, and time). The 3D convolutions can learn to extract both spatial and temporal information, enabling the network to learn motion patterns and temporal dependencies. Segmentation network 130 may include one or more activation functions after a 3D convolutional layer. Examples of activation functions may include rectified linear unit (ReLU), sigmoid, or tanh. An activation function can be applied to introduce non-linearity and enhance the network's ability to learn complex representations. The activation function may have one or more associated parameters (the parameters are an example of parameters of segmentation network 130) that modifies the non-linearity being applied by the activation function. Segmentation network 130 may include one or more pooling layers, such as 3D max-pooling or 3D average-pooling. A pooling layer may downsample the feature maps and reduce the spatial and temporal dimensions. The pooling layer may capture larger receptive fields and reduce computational complexity. Segmentation network 130 may include one or more normalization layers. A normalization layer may implement batch normalization or layer normalization. The normalization layer may perform normalization and/or scaling. Nodes in the normalization layer may have one or more associated parameters (the parameters are an example of parameters of segmentation network 130) that modifies scale and shift parameters associated with the normalization layer. The normalization layer may stabilize the training process and improve the network's performance by normalizing the activations across different layers. Segmentation network 130 may include one or more upsampling layers. An upsampling layer (or deconvolutional layer) may include convolving or filtering the input with learnable weights of the filters or kernels (the weights are an example of parameters of segmentation network 130) to produce upsampled data. The upsampling layer may increase the spatial and temporal resolution of the feature maps or activations from previous layers. Segmentation network 130 may include one or more output layers. An output layer may help to produce segmentation maps 170, e.g., including pixel-wise predictions. The output layer may perform one or more functions such as applying normalization to logits, applying an activation function to logits, applying argmax to produce a class/label, thresholding probabilities, etc. In some cases, each output element of the output layer may correspond to a class or label for the respective spatial and temporal location in the video frames 120 (or input volume). It is envisioned by the disclosure that some implementations of segmentation network 130 may include other components, such as attention mechanisms, and different types of convolutional operations (e.g., separable convolutions, dilated convolutions, etc.).

Segmentation network 130 may be trained where parameters of segmentation network 130 may be determined, learned, or updated by training 140 using training data. In other words, segmentation network 130 can be trained by training 140 to learn complex patterns and representations from training data. Training data can include video frames 120 and corresponding ground truth segmentations (e.g., annotations), such as ground truth segmentation maps 150. Ground truth segmentation maps 150 can include a temporal sequence of ground truth segmentation maps, e.g., ground truth segmentation map 152 corresponding to video frame 102, ground truth segmentation map 154 corresponding to video frame 104, ... ground truth segmentation map 156 corresponding to video frame 106, and ground truth segmentation map 158 corresponding to video frame 108. A ground truth segmentation map may include a map having pixels where each pixel may include one or more associated labels/classes, and/or one or more probabilities that the pixel belongs to one or more classes/labels. In some cases, a ground truth segmentation map may have multiple channels, where each channel may correspond to a particular class or label.

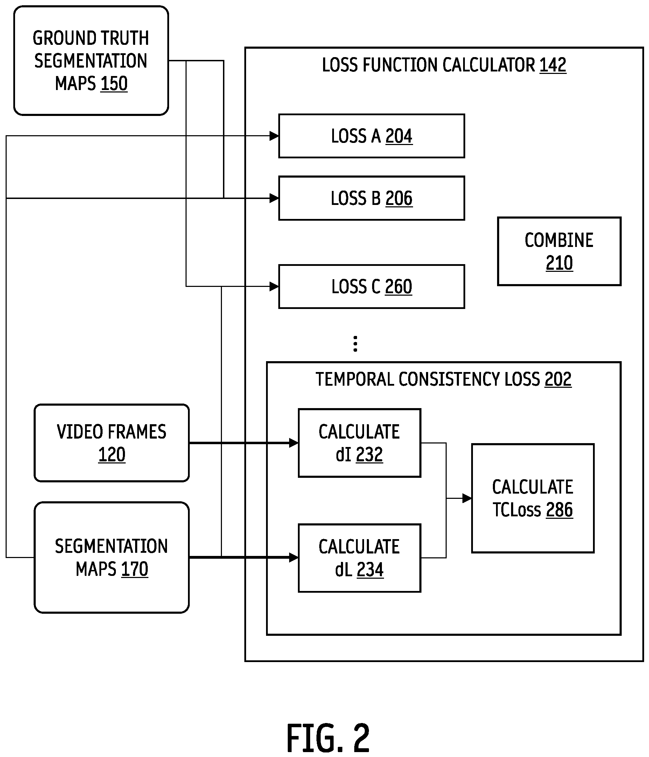

During training performed by training 140, segmentation network 130 learns parameters of segmentation network 130 that can map the video frames 120 to ground truth segmentation maps 150. The parameters may be determined, learned, or updated by minimizing a loss function during the training process. Selecting an appropriate loss function is not trivial, and the selection may depend on the goal(s) and task(s) to be achieved by segmentation network 130. In some embodiments, the loss function includes a temporal consistency loss, which is illustrated by FIGS. 2-8.

Loss function calculator 142 may calculate the loss function value. Loss function calculator 142 may utilize video frames 120, segmentation maps 170, and ground truth segmentation maps 150 to calculate the loss function value.

Parameters determination 144 may perform optimization to minimize the loss function value. Parameters determination 144 may propagate the loss function value through the network using backpropagation to determine the gradients of the loss function with respect to the learnable parameters of segmentation network 130. Parameters determination 144 may apply an optimization algorithm to determine and update the learnable parameters of segmentation network 130 based on the gradients by adjusting the learnable parameters in a direction that reduces the loss function value.

Loss function calculator 142 and parameters determination 144 may perform the training process iteratively and for one or more epochs until the loss converges or the performance of segmentation network 130 reaches a satisfactory point with a validation dataset.

*Exemplary loss function calculator including temporal consistency loss calculation*

FIG. 2 illustrates loss function calculator 142, according to some embodiments of the disclosure. Loss function calculator 142 may calculate a (total) loss function value based on a loss function, which may include one or more loss values. Loss function calculator 142 may include one or more components to determine the one or more loss values. As illustrated loss function calculator 142 may include loss A 204, loss B 206, ... and temporal consistency loss 202, where each component may compute a corresponding loss value.

Loss values computed by loss function calculator 142 can include one or more losses that measure one or more accuracy metrics, e.g., IoU, MioU, pixel accuracy, boundary accuracy. Such losses can include cross-entropy (CE) loss, binary cross-entropy (BCE) loss, weighted cross-entropy loss, Jaccard/IoU loss, dice loss, focal loss, Tversky loss, distribution-based loss, compound loss, region-based loss, boundary-based loss, etc. To calculate a total cross-entropy loss of a video frame, a cross-entropy loss for a pixel is calculated based on a negative log-likelihood of the true class and the total cross-entropy loss is calculated by summing losses for all pixels and classes. To calculate Jaccard/IoU loss, 1 minus the IoU of a first set of pixels in a segmentation map and a second set of pixels a ground truth segmentation map may be calculated. To calculate dice loss, 1 minus the dice coefficient may be calculated. The dice coefficient may be calculated as a ratio of twice the intersection of a first set of pixels in a segmentation map and a second set of pixels in a ground truth segmentation map to a sum of the number of pixels of the first set and the second set. Loss A 204 or loss B 206 may calculate CE loss or a derivation of CE loss (e.g., binary cross-entropy, weighted cross-entropy, etc.). Loss A 204 or loss B 206 may calculate Jaccard/IoU loss or a variation of Jaccard/IoU loss (e.g., MIoU, generalized IoU, distance IoU, complete IoU, soft Jaccard loss, etc.). Loss A 204 or loss B 206 may calculate dice loss or a derivation of dice loss (e.g., Tversky loss, weighted dice loss, focal dice loss, exponential dice loss, boundary dice loss, generalized dice loss, soft dice loss, etc.). Loss A 204 and loss B 206 may calculate a loss for a given video frame f according to loss function: $Loss(GT_f, P_f)$, where $GT_f$ is the ground truth segmentation map for video frame f and $P_f$ is the (predicted) segmentation map for video frame f produced by the segmentation network. In other words, the loss function is a function of, or takes inputs: $GT_f$ from ground truth segmentation maps 150, and $P_f$ from segmentation maps 170.

Loss values computed by loss function calculator 142 can include one or more losses that measure one or more temporal stability metrics, e.g., TloU, TCE, and average region tracking accuracy. Loss C 260 may calculate a second-order loss, such as TCE, according to a loss function based on information from: (optionally) ground truth segmentation maps 150 associated with consecutive video frames and segmentation maps 170 associated with consecutive video frames. The loss function may be a function of or takes inputs: (optionally) ground truth segmentation maps 150 and segmentation maps 170.

Loss values computed by loss function calculator 142 may include temporal consistency loss 202 to implement a lightweight and effective measurement of temporal stability. Temporal consistency loss 202 may calculate a temporal consistency loss (e.g., a second-order loss) according to a loss function based on information from video frames 120 associated with consecutive video frames and information from (predicted) segmentation maps 170 associated with consecutive video frames. The calculation performed in temporal consistency loss 202 is low complexity. Furthermore, the calculation is effective because the calculation takes into account changes in the input and changes in the output. The loss function used in temporal consistency loss 202 may be defined as TCLoss(dl,dL), where dl represents an input difference and dL represents an output difference. The input difference dl and the output difference dL correspond to two temporal inputs to the loss function TCLoss(dl,dL). The input difference dl may be determined based on information from video frames 120 associated with consecutive video frames. The input difference dl may represent differences between two consecutive video frames. Temporal consistency loss 202 may include calculate dl 232 to determine the input difference dl, based on video frames 120. The output difference dL may be determined based on information from (predicted) segmentation maps 170 associated with the consecutive video frames. The output difference dL may represent differences between two segmentation maps (e.g., two segmentation predictions) produced for the two consecutive video frames. Temporal consistency loss 202 may include calculate dL 234 to determine the output difference dL, based on segmentation maps 170. The two temporal inputs provide signals for determining whether and how much to penalize the segmentation network. Temporal consistency loss 202 may include calculate TCLoss 286, which may receive the two temporal inputs dl and dL from calculate dl 232 and calculate dL 234 respectively. Calculate TCLoss 286 may determine a temporal consistency loss value using the two temporal inputs, dl and dL, according to the loss function TCLoss(dl,dL). Calculate TCLoss 286 may determine a larger temporal consistency loss value (e.g., penalize more) when dl is relatively small and when dL is relatively big (e.g., when pixels in the image underwent little to no change but the segmentation prediction changed significantly). Calculate TCLoss 286 may determine a smaller temporal consistency loss value (e.g., penalize less) otherwise. The relationship of temporal consistency loss value or penalty with the two temporal inputs, dl and dL may be summarized as follows:

|  | **Big dl** | **Small dl** |
|---|---|---|
| **Big dL** | Smaller loss value or penalty | Larger loss value or penalty |
| **Small dL** | Smaller loss value or penalty | Smaller loss value or penalty |

In some embodiments, a temporal consistency loss value or pixel-wise penalty may be calculated by calculate TCLoss 286 for individual pixels of a particular video frame. The temporal consistency loss values or pixel-wise penalties for the individual pixels may be averaged by calculate TCLoss 286 over the number of pixels in the video frame and used as the final temporal consistency loss value for the video frame.

In some embodiments where multi-class segmentation is implemented, a temporal consistency loss value or pixel-wise penalty may be calculated by calculate TCLoss 286 for each class and combined by calculate TCLoss 286 to determine the temporal consistency loss value or pixel-wise penalty for an individual pixel. The temporal consistency loss values or pixel-wise penalties for the individual pixels may be averaged by calculate TCLoss 286 over the number of pixels in the video frame and used as the final temporal consistency loss value for the video frame.

To determine temporal consistency loss during training, video frames including a first video frame and a second video frame that is temporally adjacent to the first video frame may be input into a video segmentation model (e.g., segmentation network 130 of FIG. 1). The video segmentation model may generate a first segmentation prediction of the first video frame (e.g., a first segmentation map in segmentation maps 170). The video segmentation model may generate a second segmentation prediction of the second video frame (e.g., a second segmentation map in segmentation maps 170).

Calculate dl 232 may determine an input difference, dl, comprising difference between the first video frame and the second video frame. Calculate dl 232 may determine whether and how much the input to the video segmentation model changed. In some embodiments, calculate dl 232 may determine the input difference, dl, by determining pixel-wise absolute value differences between the first video frame and the second video frame. In some embodiments, the first video frame and the second video frame may have multiple channels (e.g., Red channel, Green channel, Blue channel). Calculate dl 232 may convert the first video frame and the second video frame from multi-channel into single-channel data (e.g., convert from Red-Green-Blue (RGB) into grayscale) prior to determining the pixel-wise absolute value differences. Converting multi-channel values into single-channel value may include calculating a weighted sum of the multi-channel values. Converting multi-channel values into single-channel value may include calculating a weighted average of the multi-channel values. The pixel-wise absolute value differences may represent pixel-wise absolute value intensity differences between the first video frame and the second video frame.

Calculate dL 234 may determine an output difference, dL, comprising differences between the first segmentation prediction and the second segmentation prediction. Calculate dL 234 may determine whether and how much the output of the video segmentation model changed. In some embodiments, calculate dL 234 may determine the output difference, dL, by determining pixel-wise differences between the first segmentation prediction and the second segmentation prediction. Calculate dL 234 may determine a pixel-wise difference, which may quantify a change in a predicted class or label for a particular pixel. For example, if a predicted class/label of a particular pixel is different in the first segmentation prediction and the second segmentation prediction, the pixel-wise difference may be set to a first value (e.g., 1). If a predicted class/label of a particular pixel is the same in the first segmentation prediction and the second segmentation prediction, the pixel-wise difference may be set to a second value (e.g., 0). Calculate dL 234 may determine a pixel-wise difference, which may quantify an absolute value difference of predicted probabilities (corresponding to a given class/label) for a particular pixel. For example, the pixel-wise difference may be an absolute value of a first predicted probability for the particular pixel in the first segmentation prediction corresponding to a particular class/label subtracted by a second predicted probability for the particular pixel in the second segmentation prediction corresponding to the particular class/label. In some cases, the pixel-wise difference may include a sum of the absolute value differences calculated for all classes/labels. In some cases, the pixel-wise difference may include a weighted sum of the absolute value differences calculated for all classes/labels. In some cases, the pixel-wise difference may include an average of the absolute value differences calculated for all classes/labels.

Calculate TCLoss 286 may determine the temporal consistency loss value based on the input difference dl and the output difference dL. Calculate TCLoss 286 may determine pixel-wise temporal consistency loss values, or pixel-wise penalties for individual pixels. Calculate TCLoss 286 may determine the temporal consistency loss for a video frame based on the pixel-wise temporal consistency loss values, or pixel-wise penalties for individual pixels.

Calculate TCLoss 286 may determine the pixel-wise temporal consistency loss value or pixel-wise penalties based on a function f(dl,dL), whose value is based on the input difference dl and the output difference dL. The value of the function may be used to calculate pixel-wise penalties for individual pixels. The function may be a continuous valued function. The function may have specific characteristics that help to apply appropriate temporal consistency loss or penalty. For example, the value of the function may be relatively higher when the input difference dl is less than a first inflection point or a first crossover value and the output difference dL is greater than a second inflection point or a second crossover value. The value of the function may be relatively smaller otherwise. Calculate TCLoss 286 may determine a larger temporal consistency loss value (e.g., penalize more) when dl is less than the first inflection point or the first crossover value and when dL is greater than the second inflection point or the second crossover value.

For some f(dl,dL), the first and second inflection points or the first and second crossover values define where the value of the function may change substantially (become much bigger or become much smaller) when the input difference dl crosses or passes the first inflection point or the first crossover value in a particular direction and when the output difference dL crosses or passes the second inflection point or the second crossover value in a particular direction. The value of the function may become relatively bigger when the input difference dl is less the first inflection point or the first crossover value and when the output difference dL is greater than the second inflection point or the second crossover value. The value of the function may become relatively smaller when the input difference dl is greater the first inflection point or the first crossover value and when the output difference dL is less than the second inflection point or the second crossover value.

In some embodiments, calculate TCLoss 286 may determine the temporal consistency loss value by setting a pixel-wise penalty to a first value, in response to the input difference indicating a change between the first video frame and the second video frame and the output difference indicating little or no change between the first segmentation prediction and the second segmentation prediction. In some embodiments, calculate TCLoss 286 may determine the temporal consistency value by setting the pixel-wise penalty to the first value, in response to the input difference indicating that a first change between the first video frame and the second video frame is greater than a first crossover value and the output difference indicating that a second change between the first segmentation prediction and the second segmentation prediction is less than a second crossover value. Preferably, the first value is small (representing a small penalty), because a pixel that changed in the input and the output prediction doesn't change much may be clutter, or the result may be explained by changes in lighting or color (as opposed to motion).

Calculate TCLoss 286 may determine the temporal consistency loss value by setting the pixel-wise penalty to the first value (or similar), in response to the input difference indicating a change between the first video frame and the second video frame and the output difference indicating a change between the first segmentation prediction and the second segmentation prediction. In some embodiments, calculate TCLoss 286 may determine the temporal consistency value by setting the pixel-wise penalty to the first value (or similar), in response to the input difference indicating the first change between the first video frame and the second video frame is greater than the first crossover value and the output difference indicating that the second change between the first segmentation prediction and the second segmentation prediction is greater than the second crossover value. Preferably, the first value is small (representing a small penalty), because a pixel that changed in the input and the output prediction changed as well may be explained by motion or new objects in the scene.

Calculate TCLoss 286 may determine the temporal consistency loss value by setting the pixel-wise penalty to the first value (or similar), in response to the input difference indicating little to no change between the first video frame and the second video frame and the output difference indicating little to no change between the first segmentation prediction and the second segmentation prediction. In some embodiments, calculate TCLoss 286 may determine the temporal consistency value by setting the pixel-wise penalty to the first value (or similar), in response to the input difference indicating the first change between the first video frame and the second video frame is less than the first crossover value and the output difference indicating that the second change between the first segmentation prediction and the second segmentation prediction is less than the second crossover value. Preferably, the first value is small (representing a small penalty), because a pixel that did not change in the input and the output prediction did not change as well may be explained by objects being stationary in the scene.

Calculate TCLoss 286 may determine the temporal consistency loss value by setting the pixel-wise penalty to a second value, in response to the input difference indicating little or no change between the first video frame and the second video frame and the output difference indicating a change between the first segmentation prediction and the second segmentation prediction. In some embodiments, calculate TCLoss 286 may determine the temporal consistency value by setting the pixel-wise penalty to the second value, in response to the input difference indicating the first change between the first video frame and the second video frame is less than the first crossover value and the output difference indicating that the second change between the first segmentation prediction and the second segmentation prediction is greater than the second crossover value. Preferably, the second value is large (representing a big penalty), and is greater than the first value, because a pixel that didn't change much in the input and the output prediction changed is likely caused by jitter.

Calculate TCLoss 286 may determine the temporal consistency loss by determining pixel-wise penalties, wherein a pixel-wise penalty is based on a difference in the input difference and a difference in the output difference. The pixel-wise penalty may be set to a high value for a small difference in the input (e.g., small dI) leading to a large difference in the output (e.g., large dL). The pixel-wise penalty may be set to a relatively high value when dI is less than a first crossover value and when dI is greater than a second crossover value. The pixel-wise penalty may be set to a small value otherwise. The pixel-wise penalty may be set to the small value for a large difference in the input (e.g., small dI) regardless of how small or large the difference is in the output (e.g., small dL and large dL). The pixel-wise penalty may be set to a relatively high value when dI is greater than the first crossover value. Calculate TCLoss 286 may sum pixel-wise penalties. Calculate TCLoss 286 may optionally average pixel-wise penalties over all pixels. Calculate TCLoss 286 may optionally divide the sum of the pixel-wise penalties by a number of pixels of the first video frame or the second video frame).

In some embodiments, the pixel-wise penalty has a first value in a first scenario where the difference in the input difference is small and the difference in the output difference is large. The first scenario may include where the difference in the input difference is less than a first crossover value and the difference in the output difference is greater than a second crossover value. The pixel-wise penalty has a second value in a second scenario where the difference in the input difference is small and the difference in the output difference is small. The second scenario may include where the difference in the input difference is less than the first crossover value and the difference in the output difference is less than the second crossover value. The pixel-wise penalty has a third value in a third scenario where the difference in the input difference is large and the difference in the output difference is small. The third scenario may include where the difference in the input difference is greater than the first crossover value and the difference in the output difference is less than the second crossover value. The pixel-wise penalty has a fourth value in a fourth scenario where the difference in the input difference is large and the difference in the output difference is large. The first value is greater than the second value, the third value, and the fourth value. The fourth scenario may include where the difference in the input difference is greater than the first crossover value and the difference in the output difference is greater than the second crossover value.

In some embodiments, the pixel-wise penalty may be set to a value which is selected from a set of discrete values or a discrete function/distribution (e.g., a discrete valued function of dI and dL, a look up table, etc.) In some embodiments, the pixel-wise penalty may be set to a value which is determined using a continuous function/distribution (e.g., a continuous valued function of dI and dL).

Loss function calculator 142 may include combine 210, which may combine the one or more loss values calculated for a particular video frame to determine the (total) loss function value according to the loss function. The one or more loss values includes the temporal consistency loss value determined (for a particular video frame) by temporal consistency loss 202. The one or more loss values may further include one or more additional loss values determined (for the particular video frame) by one or more of: loss A 204, loss B 206, ... and loss C 260. Loss A 204 may determine a cross-entropy loss value based on a ground truth segmentation of the second video frame from ground truth segmentation maps 150 and the second segmentation prediction from segmentation maps 170. The loss function for determining the (total) loss function value may include the temporal consistency loss value calculated by temporal consistency loss 202 and the cross-entropy loss value. Loss B 206 may determine a dice loss value based on a ground truth segmentation of the second video frame from ground truth segmentation maps 150 and the second segmentation prediction from segmentation maps 170. The loss function for determining the (total) loss function value may include the temporal consistency loss value calculated by temporal consistency loss 202 and the dice value. The loss function for determining the (total) loss function value may include the temporal consistency loss value calculated by temporal consistency loss 202, the cross-entropy loss, and the dice value. Combine 210 may combine the temporal consistency loss and the one or more (additional) loss values in the loss function as a weighted sum. The contribution or weight given to the temporal consistency loss (relative to the one or more other additional losses) calculated by temporal consistency loss 202 may be a hyperparameter (e.g., set to optimize visual quality of the trained segmentation network). The contribution of the temporal consistency loss value to the (total) loss function value may be set between 20%-30%.

Loss function calculator 142 may calculate a (total) loss function value based on one or more loss values, including the temporal consistency loss value determined by temporal consistency loss 202. Referring back to FIG. 1, parameters determination 144 may update one or more parameters of a video segmentation model (e.g., the segmentation network 130) based on (a total loss function value calculated using) a loss function. The loss function includes the temporal consistency loss value and optionally one or more additional loss values.

*Exemplary temporal consistency loss functions*

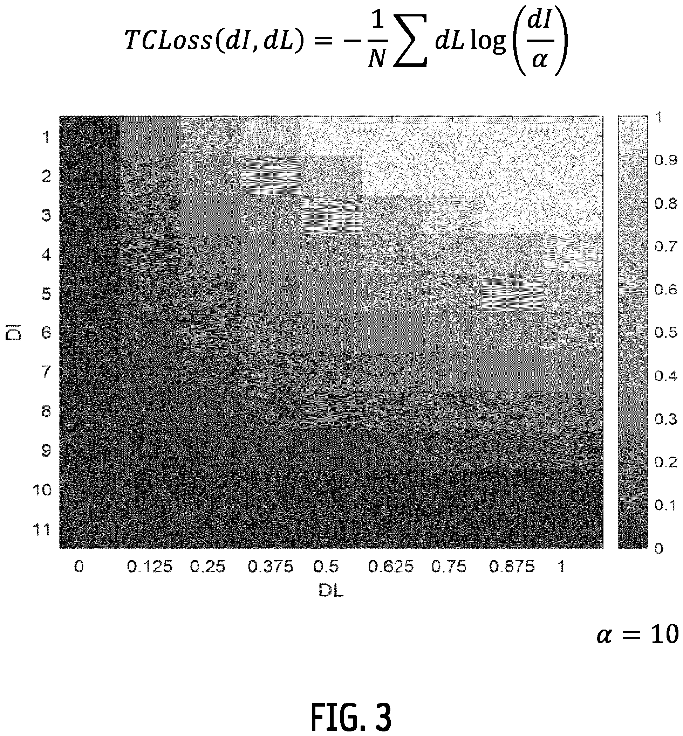

Referring back to FIG. 2, the loss function used for determining the pixel-wise penalties for calculating the temporal consistency loss by temporal consistency loss 202 can be encoded as values in a look up table having the characteristics described herein. The loss function used for determining the pixel-wise penalties for calculating the temporal consistency loss in temporal consistency loss 202 can be expressed using different mathematical relationships. The various functions and the characteristics thereof are illustrated in FIGS. 3-5.

FIG. 3 illustrates characteristics of the pixel-wise penalty used in calculating the temporal consistency loss, according to some embodiments of the disclosure. Darker portions indicate a lower pixel-wise penalty. Lighter portions indicate a higher pixel-wise penalty value. The calculation of a pixel-wise penalty may be expressed mathematically using a logarithmic function:

$$dL \log\left(\frac{dI}{\alpha}\right)$$

dI represents the input difference. dL represents the output difference. $\alpha$ is a parameter whose value may impact when dI is considered small or large. $\alpha$ may represent a normalizing factor for the input difference that may depend on characteristics of a particular video (e.g., change from one video to another video). In some cases, $\alpha$ may be adjusted set to optimize visual quality of the trained segmentation network. In the plot illustrated in FIG. 3, $\alpha = 10$. $\alpha$ may determine one or more of the first inflection point (or the first crossover value) and the second inflection point (or the second crossover value).

The temporal consistency loss function to be used for a given video frame may be expressed mathematically as follows:

$$TCLoss(dI, dL) = -\frac{1}{N} \sum dL \log\left(\frac{dI}{\alpha}\right)$$

N represents the number of pixels in a video frame. In some embodiments, the quantity $dL \log\left(\frac{dI}{\alpha}\right)$ may be computed for individual pixels (e.g., as pixel-wise penalties) and summed over all pixels, as denoted by the summation operator. In some embodiments, the sum may be divided by the number of pixels, as denoted by $\frac{1}{N}$.

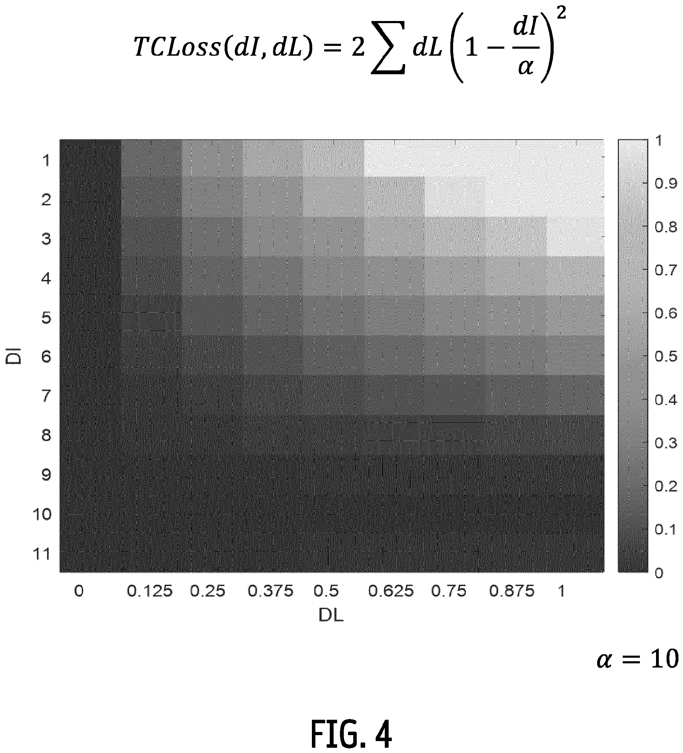

FIG. 4 illustrates characteristics of the pixel-wise penalty used in calculating the temporal consistency loss, according to some embodiments of the disclosure. Darker portions indicate a lower pixel-wise penalty. Lighter portions indicate a higher pixel-wise penalty value. The calculation of a pixel-wise penalty may be expressed mathematically using an exponential function:

$$dL \left(1 - \frac{dI}{\alpha}\right)^2$$

dI represents the input difference. dL represents the output difference. $\alpha$ is a parameter whose value may impact when dI is considered small or large. $\alpha$ may represent a normalizing factor for the input difference that may depend on characteristics of a particular video (e.g., change from one video to another video). In some cases, $\alpha$ may be adjusted set to optimize visual quality of the trained segmentation network. In the plot illustrated in FIG. 4, $\alpha = 10$. $\alpha$ may determine one or more of the first inflection point (or the first crossover value) and the second inflection point (or the second crossover value).

The temporal consistency loss function to be used for a given video frame may be expressed mathematically as follows:

$$TCLoss(dI, dL) = 2 \sum dL \left(1 - \frac{dI}{\alpha}\right)^2$$

In some embodiments, the quantity $dL \left(1 - \frac{dI}{\alpha}\right)^2$ may be computed for individual pixels (e.g., as pixel-wise penalties) and summed over all pixels, as denoted by the summation operator. In some embodiments, the sum may be multiplied by 2, as denoted by 2 in front of the summation operator.

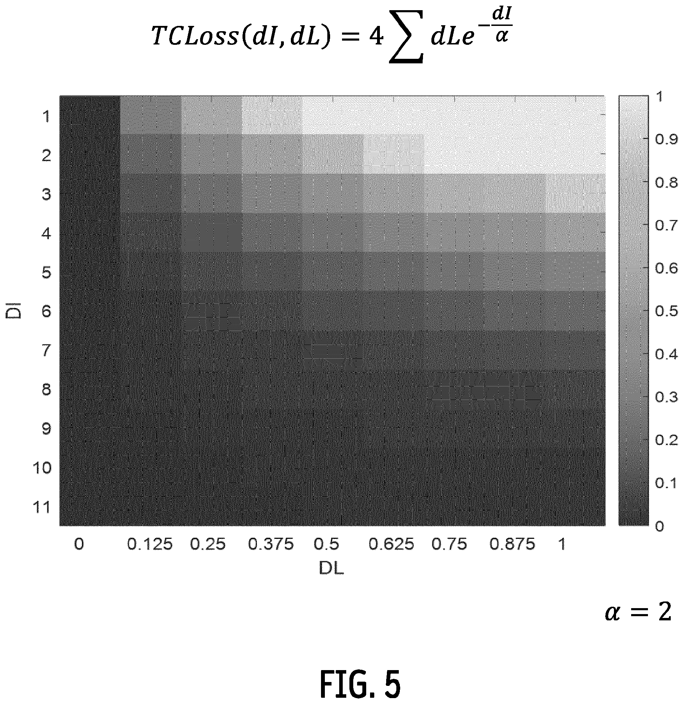

FIG. 5 illustrates characteristics of the pixel-wise penalty used in calculating the temporal consistency loss, according to some embodiments of the disclosure. Darker portions indicate a lower pixel-wise penalty. Lighter portions indicate a higher pixel-wise penalty value. The calculation of a pixel-wise penalty may be expressed mathematically using a natural exponential function:

$$dLe^{-\frac{dI}{\alpha}}$$

dI represents the input difference. dL represents the output difference. $\alpha$ is a parameter whose value may impact when dI is considered small or large. $\alpha$ may represent a normalizing factor for the input difference that may depend on characteristics of a particular video (e.g., change from one video to another video). In some cases, $\alpha$ may be adjusted set to optimize visual quality of the trained segmentation network. In the plot illustrated in FIG. 5, $\alpha = 2$. $\alpha$ may determine one or more of the first inflection point (or the first crossover value) and the second inflection point (or the second crossover value).

The temporal consistency loss function to be used for a given video frame may be expressed mathematically as follows:

$$TCLoss(dI, dL) = 4 \sum dLe^{-\frac{dI}{\alpha}}$$

In some embodiments, the quantity $dLe^{-\frac{dI}{\alpha}}$ may be computed for individual pixels (e.g., as pixel-wise penalties) and summed over all pixels, as denoted by the summation operator. In some embodiments, the sum may be multiplied by 4, as denoted by 4 in front of the summation operator.

The values to be used for pixel-wise penalty as illustrated in FIGS. 3-5 may be determined using a discrete version (or discrete approximation) of the continuous functions, e.g., a look up table encoding values of $dL \log\left(\frac{dI}{\alpha}\right)$, a look up table encoding values of $dL \left(1 - \frac{dI}{\alpha}\right)^2$, and a look up table encoding values of $dLe^{-\frac{dI}{\alpha}}$. The values to be used for pixel-wise penalty as illustrated in FIGS. 3-5 may be determined using a continuous function, e.g., $dL \log\left(\frac{dI}{\alpha}\right), dL \left(1 - \frac{dI}{\alpha}\right)^2$, and $dLe^{-\frac{dI}{\alpha}}$.

*Exemplary segmentation maps produced by segmentation networks trained using temporal consistency loss*

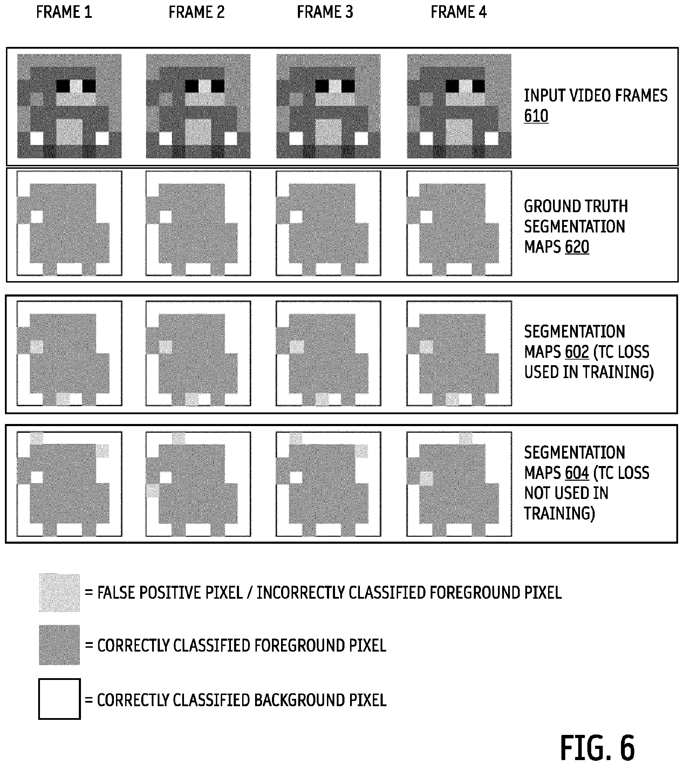

FIG. 6 illustrates segmentation maps produced by a first segmentation network trained with temporal consistency loss and a second segmentation network trained without temporal consistency loss, according to some embodiments of the disclosure. Input video frames 610 illustrate a stationary cartoon character in the foreground and a background. Ground truth segmentation maps 620 show a stable segmentation of the foreground and background. Segmentation maps 602 produced by the first segmentation network trained using the temporal consistency loss (e.g., determined by temporal consistency loss 202 of FIG. 2) have false positive pixels or incorrectly classified foreground pixels. Segmentation maps 604 produced by the second segmentation network trained without using the temporal consistency loss also have false positive pixels or incorrectly classified foreground pixels. Segmentation maps 602 produced by the first segmentation network trained using the temporal consistency loss are temporally stable. Segmentation maps 604 produced by the second segmentation network trained without the temporal consistency loss are not temporally stable and has jitter (where the false positives are at different locations between frames). The temporal consistency loss described herein would penalize the jitter in segmentation maps 604 because the input did not change but the output changed between frames. The temporal consistency loss described herein would not penalize the false positives in segmentation maps 602 because the input did not change and the output did not change between frames.

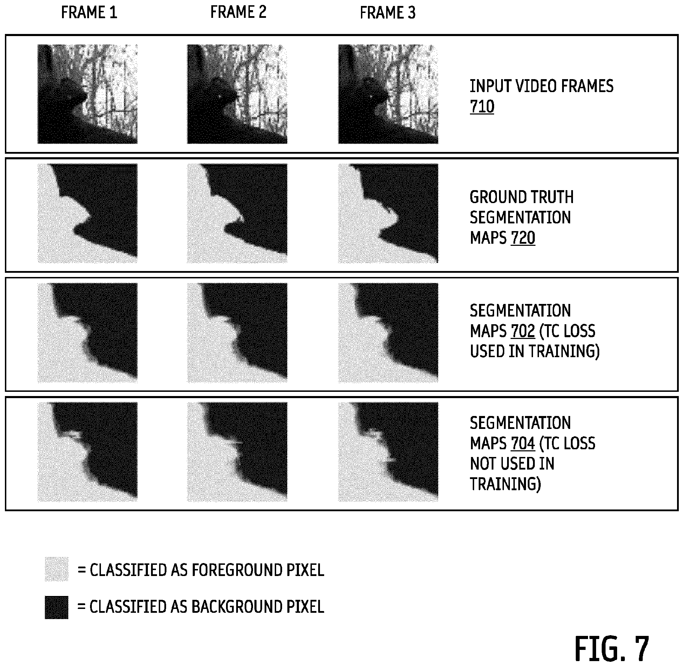

FIG. 7 illustrates segmentation maps produced by a first segmentation network trained with temporal consistency loss and a second segmentation network trained without temporal consistency loss, according to some embodiments of the disclosure. Input video frames 710 illustrate a person in the foreground and a background having tree branches. Ground truth segmentation maps 720 show ground truth segmentation of the foreground and background. Segmentation maps 702 produced by the first segmentation network trained using the temporal consistency loss (e.g., determined by temporal consistency loss 202 of FIG. 2) are temporally stable, even if the segmentation maps 702 do not exactly match the ground truth segmentation maps 720. Segmentation maps 604 produced by the second segmentation network trained without using the temporal consistency loss are temporally unstable with artifacts in various locations between frames and have substantial differences from ground truth segmentation maps 720 (low accuracy on top of low temporal stability). The temporal consistency loss described herein would penalize the artifacts in segmentation maps 704 because the input did not change but the output changed between frames.

*Exemplary method for training a video segmentation model*

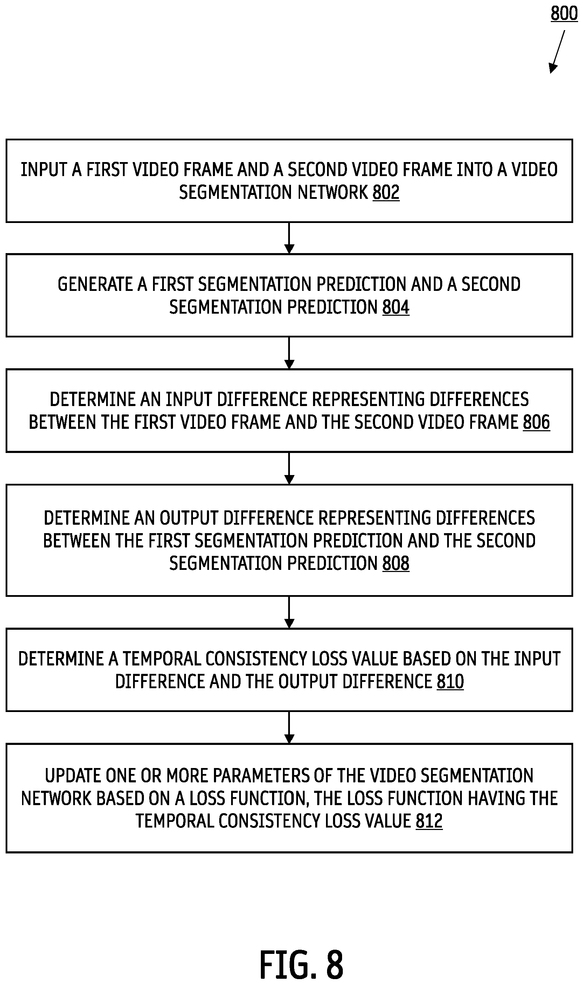

FIG. 8 depicts a flowchart illustrating a method for training a video segmentation model, according to some embodiments of the disclosure. The method may be performed by components illustrated in FIGS. 1-2.

In 802, a first video frame and a second video frame that is temporally adjacent to the first video frame may be input into a video segmentation model.

In 804, the video segmentation model may generate a first segmentation prediction of the first video frame and a second segmentation prediction of the second video frame. In some embodiments, a first segmentation prediction of the first video frame generated by the video segmentation model and a second segmentation prediction of the second video frame generated by the video segmentation model are received.

In 806, an input difference may be determined. The input difference may include differences between the first video frame and the second video frame.

In 808, an output difference may be determined. The output difference may include differences between the first segmentation prediction and the second segmentation prediction.

In 810, a temporal consistency loss value may be determined based on the input difference and the output difference.

In 812, one or more parameters of the video segmentation model may be updated based on a loss function, the loss function having the temporal consistency loss value.

Although the operations of the example method shown in and described with reference to FIG. 8 are illustrated as occurring once each and in a particular order, it will be recognized that the operations may be performed in any suitable order and repeated as desired. Additionally, one or more operations may be performed in parallel. Furthermore, the operations illustrated in FIG. 8 may be combined or may include more or fewer details than described.

*Exemplary computing device*

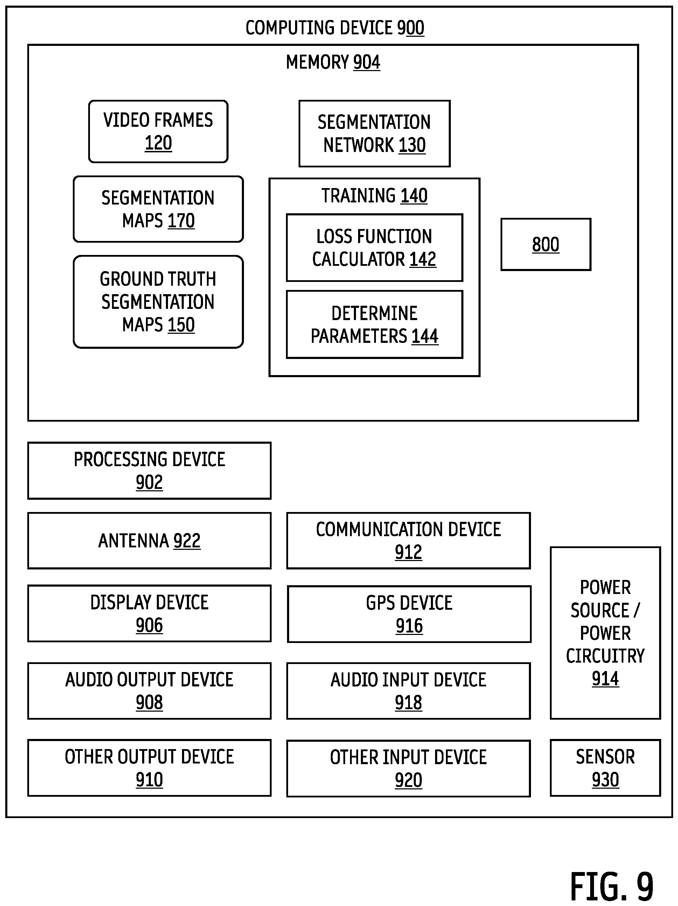

FIG. 9 is a block diagram of an apparatus or a system, e.g., an exemplary computing device 900, according to some embodiments of the disclosure. One or more computing devices 900 may be used to implement the functionalities described with the FIGS. and herein. A number of components are illustrated in the FIGS. can be included in the computing device 900, but any one or more of these components may be omitted or duplicated, as suitable for the application. In some embodiments, some or all of the components included in the computing device 900 may be attached to one or more motherboards. In some embodiments, some or all of these components are fabricated onto a single system on a chip (SoC) die. Additionally, in various embodiments, the computing device 900 may not include one or more of the components illustrated in FIG. 9, and the computing device 900 may include interface circuitry for coupling to the one or more components. For example, the computing device 900 may not include a display device 906, and may include display device interface circuitry (e.g., a connector and driver circuitry) to which a display device 906 may be coupled. In another set of examples, the computing device 900 may not include an audio input device 918 or an audio output device 908 and may include audio input or output device interface circuitry (e.g., connectors and supporting circuitry) to which an audio input device 918 or audio output device 908 may be coupled.

The computing device 900 may include a processing device 902 (e.g., one or more processing devices, one or more of the same types of processing device, one or more of different types of processing device). The processing device 902 may include electronic circuitry that process electronic data from data storage elements (e.g., registers, memory, resistors, capacitors, quantum bit cells) to transform that electronic data into other electronic data that may be stored in registers and/or memory. Examples of processing device 902 may include a central processing unit (CPU), a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 900 may include a memory 904, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 904 includes one or more non-transitory computer-readable storage media. In some embodiments, memory 904 may include memory that shares a die with the processing device 902.

In some embodiments, memory 904 includes one or more non-transitory computer-readable media storing instructions executable to perform operations described with the FIGS. and herein, such as the method 800 illustrated in FIG. 8. Exemplary parts that may be encoded as instructions and stored in memory 904 are depicted. The parts may include one or more of: training 140, segmentation network 130, loss function calculator 142, and parameters determination 144. Memory 904 may store instructions that encode one or more exemplary parts. The instructions stored in the one or more non-transitory computer-readable media may be executed by processing device 902.

In some embodiments, memory 904 may store data, e.g., data structures, binary data, bits, metadata, files, blobs, etc., as described with the FIGS. and herein. Exemplary data that may be stored in memory 904 are depicted. Exemplary data may include one or more of: video frames 120, segmentation maps 170, and ground truth segmentation maps 150. Exemplary data may include temporary consistency loss values and pixel-wise penalties as described herein.

In some embodiments, memory 904 may store one or more machine learning models (and or parts thereof). Memory 904 may store training data for training segmentation network 130. Memory 904 may store instructions that perform operations associated with segmentation network 130. Memory 904 may store input data, output data, intermediate outputs, intermediate inputs of one or more machine learning models. Memory 904 may store instructions to perform one or more operations of the machine learning model. Memory 904 may store one or more parameters used by the machine learning model. Memory 904 may store information that encodes how processing units of the machine learning model are connected with each other.

In some embodiments, the computing device 900 may include a communication device 912 (e.g., one or more communication devices). For example, the communication device 912 may be configured for managing wired and/or wireless communications for the transfer of data to and from the computing device 900. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 912 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 912 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 912 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 912 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 912 may operate in accordance with other wireless protocols in other embodiments. The computing device 900 may include an antenna 922 to facilitate wireless communications and/or to receive other wireless communications (such as radio frequency transmissions). The computing device 900 may include receiver circuits and/or transmitter circuits. In some embodiments, the communication device 912 may manage wired communications, such as electrical, optical, or any other suitable communication protocols (e.g., the Ethernet). As noted above, the communication device 912 may include multiple communication chips. For instance, a first communication device 912 may be dedicated to shorter-range wireless communications such as Wi-Fi or Bluetooth, and a second communication device 912 may be dedicated to longer-range wireless communications such as global positioning system (GPS), EDGE, GPRS, CDMA, WiMAX, LTE, EV-DO, or others. In some embodiments, a first communication device 912 may be dedicated to wireless communications, and a second communication device 912 may be dedicated to wired communications.

The computing device 900 may include power source / power circuitry 914. The power source / power circuitry 914 may include one or more energy storage devices (e.g., batteries or capacitors) and/or circuitry for coupling components of the computing device 900 to an energy source separate from the computing device 900 (e.g., DC power, AC power, etc.).

The computing device 900 may include a display device 906 (or corresponding interface circuitry, as discussed above). The display device 906 may include any visual indicators, such as a heads-up display, a computer monitor, a projector, a touchscreen display, a liquid crystal display (LCD), a light-emitting diode display, or a flat panel display, for example.

The computing device 900 may include an audio output device 908 (or corresponding interface circuitry, as discussed above). The audio output device 908 may include any device that generates an audible indicator, such as speakers, headsets, or earbuds, for example.

The computing device 900 may include an audio input device 918 (or corresponding interface circuitry, as discussed above). The audio input device 918 may include any device that generates a signal representative of a sound, such as microphones, microphone arrays, or digital instruments (e.g., instruments having a musical instrument digital interface (MIDI) output).

The computing device 900 may include a GPS device 916 (or corresponding interface circuitry, as discussed above). The GPS device 916 may be in communication with a satellite-based system and may receive a location of the computing device 900, as known in the art.

The computing device 900 may include a sensor 930 (or one or more sensors). The computing device 900 may include corresponding interface circuitry, as discussed above). Sensor 930 may sense physical phenomenon and translate the physical phenomenon into electrical signals that can be processed by, e.g., processing device 902. Examples of sensor 930 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 900 may include another output device 910 (or corresponding interface circuitry, as discussed above). Examples of the other output device 910 may include an audio codec, a video codec, a printer, a wired or wireless transmitter for providing information to other devices, haptic output device, gas output device, vibrational output device, lighting output device, home automation controller, or an additional storage device.

The computing device 900 may include another input device 920 (or corresponding interface circuitry, as discussed above). Examples of the other input device 920 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 900 may have any desired form factor, such as a handheld or mobile computer system (e.g., a cell phone, a smart phone, a mobile internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 900 may be any other electronic device that processes data.

*Exemplary machine learning models and parts thereof*

The video segmentation network described herein, such as segmentation network 130, may be or may include an exemplary implementation of one or more machine learning models, e.g., using one or more deep learning models.

A machine learning model refers to computer-implemented systems that can perform one or more tasks. A machine learning model can take an input and generate an output for the task at hand. Using and implementing a machine learning model may involve supervised learning, unsupervised learning, semi-supervised learning, and reinforcement learning. A machine learning model can be implemented in different ways. A machine learning model can include one or more of: an artificial neural network, a deep learning model, a decision tree, a support vector machine, regression analysis, a Bayesian network, a Gaussian process, a genetic algorithm, etc.

An artificial neural network may include one or more layers, modules, networks, blocks and/or operator that transform the input into an output. In some embodiments, a layer, module, network, block and/or operator may include one or more processing units and/or one or more processing nodes. A processing unit may receive one or more inputs, perform a processing function or operation, and generate one or more outputs. Processing units may be interconnected to form a network. In some cases, the processing units or nodes may be referred to as neurons. Different types of processing units or nodes may be distinguished by the processing function/operation that is being performed by the processing units or nodes. A processing unit may include one or more parameters. The parameters may be trained or learned. A processing unit may include one or more hyperparameters. Hyperparameters may be set or tuned, adjusted, or set by one or more users of the machine learning model.

One type of processing unit is a convolution block and/or operator. The processing unit applies a convolution operation to the input and generates an output. The convolution operation may extract features from the input and output the features as the output. The convolution operation may transform the input and generate an output. The processing unit may convolve the input with a kernel to generate an output. A kernel may include a matrix. The kernel may encode a function or operation that can transform the input. The kernel may include values or parameters that can be trained or learned. The processing unit may compute inner products (e.g., dot products) with a sliding/moving window capturing local regions or patches of the input and sum and/or accumulate the inner products to generate an output. Inner products may be computed successively across the input matrix, as the sliding/moving windows move across the input matrix. A convolution block and/or operator may be defined by the size of the kernel, e.g., a 1x1 convolution (a convolutional operator having a kernel size of 1x1), a 2x2 convolution(a convolutional operator having a kernel size of 2x2), a 3x3 convolution (a convolutional operator having a kernel size of 3x3), a 4x4 convolution (a convolutional operator having a kernel size of 4x4), a 5x5 convolution (a convolutional operator having a kernel size of 5x5), and so forth. The distance the window slides/moves can be set or defined by the stride of the convolution operator. In some cases, the convolution block and/or operator may apply no padding and uses the input matrix as-is. In some cases, the convolution block and/or operator may apply half padding and pads around a part of the input matrix. In some cases, the convolution block and/or operator may apply full padding and pads around the input matrix. In some cases, the convolution block and/or operator may be defined by a dimension of the filter being applied. For example, a 1-D convolution block and/or operator may apply a sliding convolution filter or kernel of size k (a hyperparameter) to one-dimensional input. Values in the sliding convolution filter or kernel can be trained and/or learned.

An exemplary layer, module, block and/or operator may include a dilation convolution block may increase can extract features at various scales. A dilation convolution block may expand the kernel by inserting gaps between the weights in the kernel. A dilation convolution module may have a dilation rate or dilation factor which indicates how much the kernel is widened. Parameters in the kernel can be trained or learned.

Another type of processing unit is a transformer unit or block. A transformer unit may be used in a transformer block. A transformer unit may implement an attention mechanism to extract dependencies between different parts of the input to the transformer unit. A transformer unit may receive an input and generate an output that represents the significance or attention of various parts of the input. A transformer unit may include query weights, key weights, and value weights as parameters that can be trained or learned. A transformer unit may apply the parameters to extract relational information between different parts of the input to the transformer unit.

Another type of processing unit is an activation unit or block. An activation block may implement or apply an activation function (e.g., a sigmoid function, a non-linear function, hyperbolic tangent function, rectified linear unit, leaky rectified linear unit, parametric rectified linear unit, sigmoid linear unit, exponential linear unit, scaled exponential linear function, logistic activation function, Heaviside activation function, identity function, binary step function, soft step function, Gaussian error linear unit, Gaussian function, softplus function, etc.) to an input to the activation block and generate an output. An activation block can be used to map an input to the block to a value between 0 and 1. An activation block can be used to map an input to the block to a zero (0) or a one (1). An activation block can introduce non-linearity. An activation block can learn complex decision boundaries. One or more parameters of the activation function can be trained or learned.

An exemplary layer, module, block, or operator may include an upsampling block. An upsampling block may increase the size of the input features or feature maps. An upsampling block may synthesize values that can be added to the input features or feature maps to increase the size and output features or feature maps that are upsampled.

An exemplary layer, module, block, or operator may include a downsampling block. A downsampling block may perform downsampling of features or feature maps generated by the stages, which may improve running efficiency of machine learning model. A downsampling block may include a pooling layer, which may receive feature maps at its input and applies a pooling operation to the feature maps. The output of the pooling layer can be provided or inputted into a subsequent stage for further processing. The pooling operation can reduce the size of the feature maps while preserving their (important) characteristics. Accordingly, the pooling operation may improve the efficiency of the overall model and can avoid over-learning. A pooling layer may perform the pooling operation through average-pooling (calculating the average value for each patch on the feature map), max-pooling (calculating the maximum value for each patch of the feature map), or a combination of both. The size of an output of a pooling layer is smaller than the size of the feature maps provided as input to the pooling layer. In some embodiments, the pooling operation is $2\times2$ pixels applied with a stride of 2 pixels, so that the pooling operation reduces the size of a feature map by a factor of 2, e.g., the number of pixels or values in the feature map is reduced to one quarter the size. In some embodiments, a pooling layer applied to a feature map of $6\times6$ results in an output pooled feature map of $3\times3$.

An exemplary layer, module, block, or operator may include a projection layer (sometimes referred to as a 1x1 convolution block and/or operator). A projection layer may transform input features into a new space, such as a space that is suitable, informative, and/or useful for tasks being performed by modules downstream (for processing by modules downstream). A projection layer may include a dense layer, or a fully connected layer where each neuron (e.g., a node or processing unit in a neural network) is connected to every neuron of the previous layer. A projection layer may generate and/or output one or more new features (e.g., a new set of features) that are more abstract or high-level than features in the input. A projection layer may implement one or more 1x1 convolution operations, where the projection layer may convolve the input features with filters of size 1x1 (e.g., with zero-padding and a stride of 1). A projection layer may implement channel-wise pooling or feature map pooling. A projection layer may reduce dimensionality of the input features by pooling features across channels. A projection layer may implement a $1\times1$ filter to create a linear projection of a stack of feature maps. A projection layer may implement a $1\times1$ filter to increase the number of feature maps. A projection layer may implement a $1\times1$ filter to decrease the number of channels. A projection layer may make the feature maps compatible with subsequent processing layers, modules, blocks, or operators. A projection layer may ensure that an element-wise adding operation can be performed to add the output of the projection layer and another feature map. A projection layer can ensure the dimensionality of the output of the projection layer matches the dimensionality of the feature map being element-wise added together. Parameters of the projection layer can be trained or learned.

An exemplary block may include an adder block. An adder block may perform element-wise adding of two or more inputs to generate an output. An adder block can be an exemplary block that can merge and/or combine two or more inputs together. Adding and summing may be synonymous. An adder block may be replaced by a concatenate block.

An exemplary block may include a multiplier block. A multiplier block may perform element-wise multiplication of two or more inputs to generate an output. A multiplier block may determine a Hadamard product.

An exemplary block may include a concatenate block. A concatenate block may perform concatenation of two or more inputs to generate an output. A concatenate block may append vectors and/or matrices in the inputs to form a new vector and/or matrix. Vector concatenation can be appended to form a larger vector. Matrix concatenation can be performed horizontally, vertically, or in a merged fashion. Horizontal matrix concatenation can be performed by concatenating matrices (that have the same height) in the inputs width-wise. Vertical matrix concatenation can be performed by concatenating matrices (that have the same width) in the inputs height-wise. A concatenate block can be an exemplary block that can merge and/or combine two or more inputs together. A concatenate block may be suitable when the two or more inputs do not have the same dimensions. A concatenate block may be suitable when it is desirable to keep the two or more inputs unchanged or intact (e.g., to not lose information). A concatenate block may be replaced by an adder block.

*Select examples*

Example 1 provides a method, including inputting a first video frame and a second video frame that is temporally adjacent to the first video frame into a video segmentation model; generating, by the video segmentation model, a first segmentation prediction of the first video frame and a second segmentation prediction of the second video frame; determining an input difference including differences between the first video frame and the second video frame; determining an output difference including differences between the first segmentation prediction and the second segmentation prediction; determining a temporal consistency loss value based on the input difference and the output difference; and updating one or more parameters of the video segmentation model based on a loss function, the loss function having the temporal consistency loss value.

Example 2 provides the method of example 1, where determining the input difference includes determining pixel-wise absolute value differences between the first video frame and the second video frame.

Example 3 provides the method of example 2, where determining the input difference includes converting the first video frame and the second video frame from multi-channel into single-channel data prior to determining the pixel-wise absolute value differences.

Example 4 provides the method of any one of examples 1-3, where determining the output difference includes determining pixel-wise differences between the first segmentation prediction and the second segmentation prediction.

Example 5 provides the method of example 4, where a pixel-wise difference quantifies a change in a predicted class.

Example 6 provides the method of example 4, where a pixel-wise difference quantifies an absolute value difference of probabilities.

Example 7 provides the method of any one of examples 1-6, where determining the temporal consistency loss value includes setting a pixel-wise penalty to a first value, in response to the input difference indicating that a first change between the first video frame and the second video frame is greater than a first crossover value and the output difference indicating that a second change between the first segmentation prediction and the second segmentation prediction is less than a second crossover value, and setting the pixel-wise penalty to a second value, in response to the input difference indicating that the first change between the first video frame and the second video frame is less than the first crossover value and the output difference indicating that the second change between the first segmentation prediction and the second segmentation prediction is greater than the second crossover value, where the second value is greater than the first value.

Example 8 provides the method of any one of examples 1-7, where determining the temporal consistency loss value includes determining pixel-wise penalties, where a pixel-wise penalty is based on a difference in the input difference and a difference in the output difference; and summing pixel-wise penalties.

Example 9 provides the method of example 8, where: the pixel-wise penalty has a first value in a first scenario where the difference in the input difference is less than a first crossover value and the difference in the output difference is greater than a second crossover value, the pixel-wise penalty has a second value in a second scenario where the difference in the input difference is less than the first crossover value and the difference in the output difference is less than the second crossover value, the pixel-wise penalty has a third value in a third scenario where the difference in the input difference is greater than the first crossover value and the difference in the output difference is less than the second crossover value, the pixel-wise penalty has a fourth value in a fourth scenario where the difference in the input difference is greater than the first crossover value and the difference in the output difference is greater than the second crossover value, and the first value is greater than the second value, the third value, and the fourth value.

Example 10 provides the method of example 8 or 9, where determining the temporal consistency loss value further includes dividing a sum of the pixel-wise penalties by a number of pixels in the second video frame.

Example 11 provides the method of any one of examples 1-10, further including determining a cross-entropy loss value based on a ground truth segmentation of the second video frame and the second segmentation prediction, where the loss function further includes the cross-entropy loss value.

Example 12 provides the method of any one of examples 1-11, further including determining a dice loss value based on a ground truth segmentation of the second video frame and the second segmentation prediction, where the loss function further includes the dice loss value.

Example 13 provides the method of any one of examples 1-12, where the loss function further includes one or more additional loss values and combines the temporal consistency loss value and the one or more additional loss values as a weighted sum.

Example 14 provides one or more non-transitory computer-readable media storing instructions that, when executed by one or more processors, cause the one or more processors to: input a first video frame and a second video frame that is temporally adjacent to the first video frame into a video segmentation model; generate, by the video segmentation model, a first segmentation prediction of the first video frame and a second segmentation prediction of the second video frame; determine an input difference including differences between the first video frame and the second video frame; determine an output difference including differences between the first segmentation prediction and the second segmentation prediction; determine a temporal consistency loss value based on the input difference and the output difference; and update one or more parameters of the video segmentation model based on a loss function, the loss function having the temporal consistency loss value.

Example 15 provides the one or more non-transitory computer-readable media of example 14, where determining the input difference includes determining pixel-wise absolute value differences between the first video frame and the second video frame.

Example 16 provides the one or more non-transitory computer-readable media of example 15, where determining the input difference includes converting the first video frame and the second video frame from multi-channel into single-channel data prior to determining the pixel-wise absolute value differences.

Example 17 provides the one or more non-transitory computer-readable media of any one of examples 14-16, where determining the output difference includes determining pixel-wise differences between the first segmentation prediction and the second segmentation prediction.

Example 18 provides the one or more non-transitory computer-readable media of example 17, where a pixel-wise difference quantifies a change in a predicted class.

Example 19 provides the one or more non-transitory computer-readable media of example 17, where a pixel-wise difference quantifies an absolute value difference of probabilities.

Example 20 provides the one or more non-transitory computer-readable media of any one of examples 14-19, where determining the temporal consistency loss value includes setting a pixel-wise penalty to a first value, in response to the input difference indicating that a first change between the first video frame and the second video frame is greater than a first crossover value and the output difference indicating that a second change between the first segmentation prediction and the second segmentation prediction is less than a second crossover value, and setting the pixel-wise penalty to a second value, in response to the input difference indicating that the first change between the first video frame and the second video frame is less than the first crossover value and the output difference indicating that the second change between the first segmentation prediction and the second segmentation prediction is greater than the second crossover value, where the second value is greater than the first value.

Example 21 provides the one or more non-transitory computer-readable media of any one of examples 14-20, where determining the temporal consistency loss value includes determining pixel-wise penalties, where a pixel-wise penalty is based on a difference in the input difference and a difference in the output difference; and summing pixel-wise penalties.

Example 22 provides the one or more non-transitory computer-readable media of example 21, where: the pixel-wise penalty has a first value in a first scenario where the difference in the input difference is less than a first crossover value and the difference in the output difference is greater than a second crossover value, the pixel-wise penalty has a second value in a second scenario where the difference in the input difference is less than the first crossover value and the difference in the output difference is less than the second crossover value, the pixel-wise penalty has a third value in a third scenario where the difference in the input difference is greater than the first crossover value and the difference in the output difference is less than the second crossover value, the pixel-wise penalty has a fourth value in a fourth scenario where the difference in the input difference is greater than the first crossover value and the difference in the output difference is greater than the second crossover value, and the first value is greater than the second value, the third value, and the fourth value.

Example 23 provides the one or more non-transitory computer-readable media of example 21 or 22, where determining the temporal consistency loss value further includes dividing a sum of the pixel-wise penalties by a number of pixels in the second video frame.

Example 24 provides the one or more non-transitory computer-readable media of any one of examples 14-23, where the instructions further cause the one or more processors to: determine a cross-entropy loss value based on a ground truth segmentation of the second video frame and the second segmentation prediction, where the loss function further includes the cross-entropy loss value.

Example 25 provides the one or more non-transitory computer-readable media of any one of examples 14-24, where the instructions further cause the one or more processors to: determine a dice loss value based on a ground truth segmentation of the second video frame and the second segmentation prediction, where the loss function further includes the dice loss value.

Example 26 provides the one or more non-transitory computer-readable media of any one of examples 14-25, where the loss function further includes one or more additional loss values and combines the temporal consistency loss value and the one or more additional loss values as a weighted sum.

Example 27 provides an apparatus: one or more processors; and one or more non-transitory computer-readable media storing instructions that, when executed by one or more processors, cause the one or more processors to: input a first video frame and a second video frame that is temporally adjacent to the first video frame into a video segmentation model; generate, by the video segmentation model, a first segmentation prediction of the first video frame and a second segmentation prediction of the second video frame; determine an input difference including differences between the first video frame and the second video frame; determine an output difference including differences between the first segmentation prediction and the second segmentation prediction; determine a temporal consistency loss value based on the input difference and the output difference; and update one or more parameters of the video segmentation model based on a loss function, the loss function having the temporal consistency loss value.

Example 28 provides the apparatus of example 27, where determining the input difference includes determining pixel-wise absolute value differences between the first video frame and the second video frame.

Example 29 provides the apparatus of example 28, where determining the input difference includes converting the first video frame and the second video frame from multi-channel into single-channel data prior to determining the pixel-wise absolute value differences.

Example 30 provides the apparatus of any one of examples 27-29, where determining the output difference includes determining pixel-wise differences between the first segmentation prediction and the second segmentation prediction.

Example 31 provides the apparatus of example 30, where a pixel-wise difference quantifies a change in a predicted class.

Example 32 provides the apparatus of example 30, where a pixel-wise difference quantifies an absolute value difference of probabilities.

Example 33 provides the apparatus of any one of examples 27-32, where determining the temporal consistency loss value includes setting a pixel-wise penalty to a first value, in response to the input difference indicating that a first change between the first video frame and the second video frame is greater than a first crossover value and the output difference indicating that a second change between the first segmentation prediction and the second segmentation prediction is less than a second crossover value, and setting the pixel-wise penalty to a second value, in response to the input difference indicating that the first change between the first video frame and the second video frame is less than the first crossover value and the output difference indicating that the second change between the first segmentation prediction and the second segmentation prediction is greater than the second crossover value, where the second value is greater than the first value.

Example 34 provides the apparatus of any one of examples 27-33, where determining the temporal consistency loss value includes determining pixel-wise penalties, where a pixel-wise penalty is based on a difference in the input difference and a difference in the output difference; and summing pixel-wise penalties.

Example 35 provides the apparatus of example 34, where: the pixel-wise penalty has a first value in a first scenario where the difference in the input difference is less than a first crossover value and the difference in the output difference is greater than a second crossover value, the pixel-wise penalty has a second value in a second scenario where the difference in the input difference is less than the first crossover value and the difference in the output difference is less than the second crossover value, the pixel-wise penalty has a third value in a third scenario where the difference in the input difference is greater than the first crossover value and the difference in the output difference is less than the second crossover value, the pixel-wise penalty has a fourth value in a fourth scenario where the difference in the input difference is greater than the first crossover value and the difference in the output difference is greater than the second crossover value, and the first value is greater than the second value, the third value, and the fourth value.

Example 36 provides the apparatus of example 34 or 35, where determining the temporal consistency loss value further includes dividing a sum of the pixel-wise penalties by a number of pixels in the second video frame.

Example 37 provides the apparatus of any one of examples 27-36, where the instructions further cause the one or more processors to: determine a cross-entropy loss value based on a ground truth segmentation of the second video frame and the second segmentation prediction, where the loss function further includes the cross-entropy loss value.

Example 38 provides the apparatus of any one of examples 27-37, where the instructions further cause the one or more processors to: determine a dice loss value based on a ground truth segmentation of the second video frame and the second segmentation prediction;

**[0131]** , where the loss function further includes the dice loss value.

Example 39 provides the apparatus of any one of examples 27-38, where the loss function further includes one or more additional loss values and combines the temporal consistency loss value and the one or more additional loss values as a weighted sum.

Example A provides one or more non-transitory computer-readable media storing instructions that, when executed by one or more processors, cause the one or more processors to perform any one of the methods provided in examples 1-13 and methods described herein.

Example B provides an apparatus comprising means to carry out or means for carrying out any one of the computer-implemented methods provided in examples 1-13 and methods described herein.

Example C provides a computer-implemented system, comprising one or more processors, and one or more non-transitory computer-readable media storing instructions that, when executed by the one or more processors, cause the one or more processors to perform any one of the methods provided in examples 1-13 and methods described herein.

Example D provides a computer-implemented system comprising one or more components illustrated in FIG. 1 to perform operations described herein.

Example E provides a computer-implemented system comprising one or more components illustrated in FIG. 2 to perform operations described herein.

*Variations and other notes*

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1.  A method, comprising:

    inputting a first video frame and a second video frame that is temporally adjacent to the first video frame into a video segmentation model;
    generating, by the video segmentation model, a first segmentation prediction of the first video frame and a second segmentation prediction of the second video frame;
    determining an input difference comprising differences between the first video frame and the second video frame;
    determining an output difference comprising differences between the first segmentation prediction and the second segmentation prediction;
    determining a temporal consistency loss value based on the input difference and the output difference; and
    updating one or more parameters of the video segmentation model based on a loss function, the loss function having the temporal consistency loss value.

2.  The method of claim 1, wherein determining the input difference comprises determining pixel-wise absolute value differences between the first video frame and the second video frame.

3.  The method of claim 2, wherein determining the input difference comprises converting the first video frame and the second video frame from multi-channel into single-channel data prior to determining the pixel-wise absolute value differences.

4.  The method of any one of claims 1-3, wherein determining the output difference comprises determining pixel-wise differences between the first segmentation prediction and the second segmentation prediction.

5.  The method of claim 4, wherein a pixel-wise difference quantifies a change in a predicted class.

6.  The method of claim 4, wherein a pixel-wise difference quantifies an absolute value difference of probabilities.

7.  The method of any one of claims 1-6, wherein determining the temporal consistency loss value comprises:

    setting a pixel-wise penalty to a first value, in response to the input difference indicating that a first change between the first video frame and the second video frame is greater than a first crossover value and the output difference indicating that a second change between the first segmentation prediction and the second segmentation prediction is less than a second crossover value; and
    setting the pixel-wise penalty to a second value, in response to the input difference indicating that the first change between the first video frame and the second video frame is less than the first crossover value and the output difference indicating that the second change between the first segmentation prediction and the second segmentation prediction is greater than the second crossover value;
wherein the second value is greater than the first value.

8. The method of any one of claims 1-7, wherein determining the temporal consistency loss value comprises:

determining pixel-wise penalties, wherein a pixel-wise penalty is based on a difference in the input difference and a difference in the output difference; and
summing pixel-wise penalties.

9. The method of claim 8, wherein:

the pixel-wise penalty has a first value in a first scenario where the difference in the input difference is less than a first crossover value and the difference in the output difference is greater than a second crossover value;
the pixel-wise penalty has a second value in a second scenario where the difference in the input difference is less than the first crossover value and the difference in the output difference is less than the second crossover value;
the pixel-wise penalty has a third value in a third scenario where the difference in the input difference is greater than the first crossover value and the difference in the output difference is less than the second crossover value;
the pixel-wise penalty has a fourth value in a fourth scenario where the difference in the input difference is greater than the first crossover value and the difference in the output difference is greater than the second crossover value; and
the first value is greater than the second value, the third value, and the fourth value.

10. The method of claim 8 or 9, wherein determining the temporal consistency loss value further comprises:
dividing a sum of the pixel-wise penalties by a number of pixels in the second video frame.

11. The method of any one of claims 1-10, further comprising:

determining a cross-entropy loss value based on a ground truth segmentation of the second video frame and the second segmentation prediction;
wherein the loss function further includes the cross-entropy loss value.

12. The method of any one of claims 1-11, further comprising:

determining a dice loss value based on a ground truth segmentation of the second video frame and the second segmentation prediction;
wherein the loss function further includes the dice loss value.

13. The method of any one of claims 1-12, wherein the loss function further includes one or more additional loss values and combines the temporal consistency loss value and the one or more additional loss values as a weighted sum.

14. One or more non-transitory computer-readable media storing instructions that, when executed by one or more processors, cause the one or more processors to perform a method according to any one of claims 1-13.

15. An apparatus, comprising:

one or more processors; and
one or more non-transitory computer-readable media storing instructions that, when executed by one or more processors, cause the one or more processors to perform a method according to any one of claims 1-13.

FIG. 1

GROUND TRUTH
SEGMENTATION
MAPS 150

LOSS FUNCTION CALCULATOR 142

LOSS A 204

LOSS B 206

COMBINE
210

LOSS C 260

$\vdots$

TEMPORAL CONSISTENCY LOSS 202

VIDEO FRAMES
120

CALCULATE
dI 232

CALCULATE
TCLoss 286

SEGMENTATION
MAPS 170

CALCULATE
dL 234

# FIG. 2

$$TCLoss(dI, dL) = -\frac{1}{N}\sum dL \log\left(\frac{dI}{\alpha}\right)$$

$$\alpha = 10$$

FIG. 3

$$TCLoss(dI, dL) = 2 \sum dL \left( 1 - \frac{dI}{\alpha} \right)^2$$

$$\alpha = 10$$

FIG. 4

$$TCLoss(dI, dL) = 4 \sum dL e^{-\frac{dI}{\alpha}}$$

$$\alpha = 2$$

# FIG. 5

FRAME 1 FRAME 2 FRAME 3 FRAME 4

INPUT VIDEO FRAMES 610

GROUND TRUTH SEGMENTATION MAPS 620

SEGMENTATION MAPS 602 (TC LOSS USED IN TRAINING)

SEGMENTATION MAPS 604 (TC LOSS NOT USED IN TRAINING)

= FALSE POSITIVE PIXEL / INCORRECTLY CLASSIFIED FOREGROUND PIXEL

= CORRECTLY CLASSIFIED FOREGROUND PIXEL

= CORRECTLY CLASSIFIED BACKGROUND PIXEL

FIG. 6

FRAME 1          FRAME 2          FRAME 3

INPUT VIDEO FRAMES
710

GROUND TRUTH
SEGMENTATION
MAPS 720

SEGMENTATION
MAPS 702 (TC LOSS
USED IN TRAINING)

SEGMENTATION
MAPS 704 (TC LOSS
NOT USED IN
TRAINING)

= CLASSIFIED AS FOREGROUND PIXEL

= CLASSIFIED AS BACKGROUND PIXEL

FIG. 7

800

INPUT A FIRST VIDEO FRAME AND A SECOND VIDEO FRAME INTO A VIDEO SEGMENTATION NETWORK 802

GENERATE A FIRST SEGMENTATION PREDICTION AND A SECOND SEGMENTATION PREDICTION 804

DETERMINE AN INPUT DIFFERENCE REPRESENTING DIFFERENCES BETWEEN THE FIRST VIDEO FRAME AND THE SECOND VIDEO FRAME 806

DETERMINE AN OUTPUT DIFFERENCE REPRESENTING DIFFERENCES BETWEEN THE FIRST SEGMENTATION PREDICTION AND THE SECOND SEGMENTATION PREDICTION 808

DETERMINE A TEMPORAL CONSISTENCY LOSS VALUE BASED ON THE INPUT DIFFERENCE AND THE OUTPUT DIFFERENCE 810

UPDATE ONE OR MORE PARAMETERS OF THE VIDEO SEGMENTATION NETWORK BASED ON A LOSS FUNCTION, THE LOSS FUNCTION HAVING THE TEMPORAL CONSISTENCY LOSS VALUE 812

# FIG. 8

COMPUTING DEVICE 900

MEMORY 904

VIDEO FRAMES
120

SEGMENTATION
NETWORK 130

SEGMENTATION
MAPS 170

TRAINING 140

LOSS FUNCTION
CALCULATOR 142

800

GROUND TRUTH
SEGMENTATION
MAPS 150

DETERMINE
PARAMETERS 144

PROCESSING DEVICE
902

ANTENNA 922

COMMUNICATION DEVICE
912

DISPLAY DEVICE
906

GPS DEVICE
916

POWER
SOURCE /
POWER
CIRCUITRY
914

AUDIO OUTPUT DEVICE
908

AUDIO INPUT DEVICE
918

OTHER OUTPUT DEVICE
910

OTHER INPUT DEVICE
920

SENSOR
930

FIG. 9

<table>
<tr><td colspan="2"></td><td>EUROPEAN SEARCH REPORT</td><td><strong>Application Number</strong><br>EP 25 16 8556</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YIZHE ET AL: "Perceptual Consistency in Video Segmentation", 2022 IEEE/CVF WINTER CONFERENCE ON APPLICATIONS OF COMPUTER VISION (WACV), IEEE, 3 January 2022 (2022-01-03), pages 2623-2632, XP034086077, DOI: 10.1109/WACV51458.2022.00268 [retrieved on 2022-02-07] | 1-5, 13-15 | INV.<br>G06T7/11<br>G06T7/174<br>G06T7/254 |
| Y | * page 2625 - page 2628 * | 11,12 | |
| A | | 6-10 | |
| | ----- | | |
| Y | Azad Reza ET AL: "Loss Functions in the Era of Semantic Segmentation: A Survey and Outlook", arXiv.org, 8 December 2023 (2023-12-08), pages 1-24, XP093296882, Retrieved from the Internet: URL:https://arxiv.org/pdf/2312.05391 [retrieved on 2025-07-17] | 11,12 | |
| A | * page 2 - page 5; figure 1 * | 1-10, 13-15 | TECHNICAL FIELDS SEARCHED (IPC)<br><br>G06T |
| | ----- | | |
| A | WO 2022/104026 A1 (QUALCOMM INC [US]) 19 May 2022 (2022-05-19) * paragraph [0037] - paragraph [0078] * | 1-15 | |
| | ----- | | |

The present search report has been drawn up for all claims

| Place of search | Date of completion of the search | Examiner |
|---|---|---|
| Munich | 18 July 2025 | Üreyen, Soner |

## ANNEX TO THE EUROPEAN SEARCH REPORT
## ON EUROPEAN PATENT APPLICATION NO.

EP 25 16 8556

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | Publication date | Patent family member(s) | | Publication date |
|---|---|---|---|---|
| WO 2022104026 A1 | 19-05-2022 | CN | 116547711 A | 04-08-2023 |
| | | EP | 4244811 A1 | 20-09-2023 |
| | | KR | 20230107805 A | 18-07-2023 |
| | | US | 2022156943 A1 | 19-05-2022 |
| | | WO | 2022104026 A1 | 19-05-2022 |

EPO FORM P0459

For more details about this annex : see Official Journal of the European Patent Office, No. 12/82